# EUROPÄISCHE PATENTANMELDUNG

(11) **EP 4 528 974 A2**
(43) Veröffentlichungstag der Anmeldung: **26.03.2025**
(21) Anmeldenummer: 24198388.1
(22) Anmeldetag: 04.09.2024
(51) Int. Cl.: H02J 7/00

(54) **ADAPTER ZUM LÖSBAREN VERBINDEN EINES AKKUPACKS MIT EINEM ELEKTROGERÄT**

(30) Priorität: 22.09.2023 DE 102023125821
(71) Anmelder: Einhell Germany AG, 94405 Landau / Isar (DE)
(72) Erfinder: Mayr, Stefan, 94405 Landau / Isar (DE)
(74) Vertreter: Canzler & Bergmeier Patentanwälte Partnerschaft mbB

(57) **Zusammenfassung**

Die Erfindung betrifft einen Adapter (2) zum lösbaren Verbinden eines Akkupacks (3) mit einem Elektrogerät (4) mit einer Geräteschnittstelle (5) zum Verbinden des Elektrogeräts (4), mit einer Akkupackschnittstelle (6) zum Verbinden des Akkupacks (3) und mit einer Stromleitung (9), die die Akkupackschnittstelle (6) und die Geräteschnittstelle (5) elektrisch miteinander verbindet, sodass zum Betreiben des Elektrogeräts (4) elektrischer Strom vom Ackupack (3) zum Elektrogerät (4) fließen kann. Erfindungsgemäß umfasst der Adapter (2) eine elektronische Adaptereinheit (10), die derart ausgebildet ist, dass diese für ein im bestimmungsgemäßen Gebrauch an der Geräteschnittstelle (5) angeschlossenes Elektrogerät (4) zumindest einen gerätespezifischen Steuerparameter, insbesondere einen Abschaltstrom, bestimmen kann. Ferner betrifft die Erfindung ein System mit einem Akkupack (3) und einem derartigen Adapter (2).

## Beschreibung

Die vorliegende Erfindung betrifft einen Adapter zum lösbaren Verbinden eines Akkupacks mit einem Elektrogerät, insbesondere einem elektrischen Werkzeug, Gartengerät und/oder Reinigungsgerät. Der Adapter umfasst eine Geräteschnittstelle zum Verbinden des Elektrogeräts, eine Akkupackschnittstelle zum Verbinden des Akkupacks und eine Stromleitung, die die Akkupackschnittstelle und die Geräteschnittstelle elektrisch miteinander verbindet, sodass zum Betreiben des Elektrogeräts elektrischer Strom vom Akkupack zum Elektrogerät fließen kann. Ferner betrifft die Erfindung ein System mit einem Akkupack und einem derartigen Adapter.

Aus der US 7,339,350 B2 ist ein Adapter zum lösbaren Verbinden eines Ackupacks mit einem Elektrogerät bekannt. Dieser umfasst eine Akkupackschnittstelle, die mechanisch an ein Akkupack angepasst ist, sodass das Ackupack mit dem Adapter lösbar verbunden werden kann. Ferner weist der Adapter eine Geräteschnittstelle auf, die mechanisch an ein Elektrogerät angepasst ist, sodass das Elektrogerät lösbar mit dem Adapter verbunden werden kann. Nachteilig ist es, dass Elektrogeräte, die zwar die gleiche korrespondierende Geräteschnittstelle aufweisen, aber zueinander unterschiedliche elektrische Spezifikationen haben, nicht mit dem gleichen Adapter betrieben werden können, da dies, insbesondere durch eine elektrische Über- oder Falschbelastung, zu einer Beschädigung des Akkupacks und/oder des Elektrogeräts führen kann.

Aufgabe der vorliegenden Erfindung ist es, einen Adapter und/oder ein System aus einem Adapter und einem Akkupack zu schaffen, mit dem die aus dem Stand der Technik bekannten Nachteile beseitigt werden können, insbesondere mehrere Elektrogeräte mit zueinander unterschiedlichen elektrischen Spezifikationen betrieben werden können.

Die Aufgabe wird gelöst durch einen Adapter und/oder ein System mit den Merkmalen der unabhängigen Patentansprüche.

Vorgeschlagen wird ein Adapter zum lösbaren Verbinden eines Akkupacks mit einem Elektrogerät, insbesondere einem elektrischen Werkzeug, Gartengerät und/oder Reinigungsgerät. Der Adapter umfasst eine Geräteschnittstelle zum Verbinden des Elektrogeräts und eine Akkupackschnittstelle zum Verbinden des Akkupacks. Ferner weist der Adapter eine Stromleitung auf, die die Akkupackschnittstelle und die Geräteschnittstelle elektrisch miteinander verbindet, sodass zum Betreiben des Elektrogeräts elektrischer Strom vom Akkupack zum Elektrogerät fließen kann. Der Adapter umfasst eine elektronische Adaptereinheit. Diese ist derart ausgebildet, dass diese für ein im bestimmungsgemäßen Gebrauch an der Geräteschnittstelle angeschlossenes Elektrogerät zumindest ein gerätespezifischer Steuerparameter bestimmt werden kann, vorzugsweise dafür, dass das Elektrogerät während eines Entladeprozesses des Akkupacks von einer Geräteschutzsteuerung geschützt werden kann. Unter Berücksichtigung des von der elektronischen Adaptereinheit bestimmten gerätespezifischen Steuerparameters kann das Elektrogerät während eines Entladeprozesses des Akkupacks von einer Geräteschutzsteuerung geschützt werden. Die Geräteschutzsteuerung kann hierbei insbesondere Bestandteil des Adapters oder des Akkupacks sein. Vorteilhafterweise können demnach mehrere Elektrogeräte, die zueinander unterschiedliche elektrische Spezifikationen aufweisen, mit demselben Adapter betrieben werden, ohne dass Gefahr besteht, dass diese durch eine falsche Steuerung und/oder Regelung des Entladeprozesses beschädigt werden.

Vorteilhaft ist es, wenn die elektronische Adaptereinheit als gerätespezifischen Steuerparameter einen Abschaltstrom des im bestimmungsgemäßen Gebrauch verbundenen Elektrogeräts bestimmen kann. Infolgedessen kann eine Überbelastung des angeschlossenen Elektrogeräts vermieden werden, wenn ein Stromfluss bei Überschreiten des gerätespezifischen Abschaltstrom überschritten wird.

Vorteilhaft ist es, wenn die elektronische Adaptereinheit, insbesondere über zumindest eine erste Verbindungsleitung, elektrisch mit der Geräteschnittstelle und/oder, insbesondere über zumindest eine zweite Verbindungsleitung, elektrisch mit der Akkupackschnittstelle verbunden ist.

Auch ist es von Vorteil, wenn die elektronische Adaptereinheit derart ausgebildet ist, dass diese selbstständig erkennen kann, wenn im bestimmungsgemäßen Gebrauch ein Elektrogerät mit der Geräteschnittstelle gekoppelt ist. Hierfür kann die elektronische Adaptereinheit beispielsweise die Geräteschnittstelle, insbesondere die erste Verbindungsleitung und/oder die Stromleitung hinsichtlich eines Stromflusses und/oder einer Datenübertragung überwachen.

Vorteile bringt es zudem mit sich, wenn die elektronische Adaptereinheit derart ausgebildet ist, dass diese im bestimmungsgemäßen Gebrauch den gerätespezifischen Steuerparameter für das an der Geräteschnittstelle angeschlossene Elektrogerät, insbesondere selbstständig, anhand eines gerätespezifischen Identifikationswertes ermittelt. Unter dem Begriff "Identifikationswert" ist ein Wert zu verstehen, der das jeweilige Elektrogerät, eine Elektrogerätekategorie und/oder eine Elektrogeräteart eindeutig identifiziert. Hierbei kann es sich beispielsweise um eine Identifikationsnummer, ein Identifikationssignal und/oder um einen elektrischen Messwert handeln. Anhand des gerätespezifischen Identifikationswertes kann die elektronische Adaptereinheit somit eindeutig feststellen, mit welchem Elektronikgerät sie es zu tun hat, und entsprechende Maßnahmen einleiten, damit das angeschlossene Elektrogerät während des Entladeprozesses vom Akkupack derart mit Strom versorgt wird, dass eine Beschädigung des Elektrogeräts und/oder des Akkupacks vermieden wird.

Vorteilhaft ist es, wenn die elektronische Adaptereinheit derart ausgebildet ist, dass diese den gerätespezifischen Identifikationswert im bestimmungsgemäßen Gebrauch über die erste Verbindungsleitung und/oder die Stromleitung ermittelt.

Ebenso bringt es Vorteile mit sich, wenn der gerätespezifische Identifikationswert ein gerätespezifischer Messwert, insbesondere ein Widerstandswert eines elektrischen Widerstands des an der Geräteschnittstelle angeschlossenen Elektrogeräts ist. Demnach kann das Elektrogerät einen elektrischen Widerstand aufweisen, der von der elektronischen Adaptereinheit gemessen werden kann. Ebenso ist es auch denkbar, dass das Elektrogerät einen verbauten elektrischen Widerstand umfasst, der von der Adaptereinheit gemessen werden kann. So kann beispielsweise eine zweite Geräteschnittstelle des Elektrogeräts einen elektrischen Widerstand umfassen, der von der elektronischen Adaptereinheit ausgelesen und/oder gemessen werden kann. Hierdurch kann eine sehr schnelle und kostengünstige Identifikation des Elektrogeräts erfolgen. Zusätzlich oder alternativ ist es vorteilhaft, wenn der Messwert ein Strommesswert, insbesondere eine Stromstärke und/oder eine Stromspannung, des an der Geräteschnittstelle angeschlossenen Elektrogeräts ist.

Auch ist es vorteilhaft, wenn der gerätespezifische Identifikationswert ein elektrisches Signal, insbesondere ein Abschaltsignal, des an der Geräteschnittstelle angeschlossenen Elektrogeräts ist, das von der elektronischen Adaptereinheit angefordert und/oder zur Identifikation abgefangen wird.

Ferner ist es von Vorteil, wenn der gerätespezifische Identifikationswert eine Bitfolge ist. Diese kann im bestimmungsgemäßen Gebrauch von der elektronischen Adaptereinheit angefordert, von dem an der Geräteschnittstelle angeschlossenen Elektrogerät an die elektronische Adaptereinheit übermittelt und/oder von der elektronischen Adaptereinheit abgefangen werden.

Des Weiteren ist es vorteilhaft, wenn die elektronische Adaptereinheit einen Datenspeicher umfasst. In diesen können Informationen zur Identifikation des im bestimmungsgemäßen Gebrauch angeschlossenen Elektrogeräts abgespeichert sein.

Ferner ist es vorteilhaft, wenn in der elektronischen Adaptereinheit, insbesondere in dem Datenspeicher, für mehrere unterschiedliche Elektrogeräte jeweils zumindest ein gerätespezifischer Steuerparameter abgespeichert ist. Zusätzlich ist es vorteilhaft, wenn diese gerätespezifischen Steuerparameter, insbesondere in einer Liste, zusammen mit einem Gerätekennwert abgespeichert sind.

Des Weiteren ist es vorteilhaft, wenn die elektronische Adaptereinheit derart ausgebildet ist, dass diese im bestimmungsgemäßen Gebrauch anhand des gerätespezifischen Identifikationswertes den zumindest einen korrespondierenden gerätespezifischen Steuerparameter, insbesondere aus dem Datenspeicher, ermittelt. Vorteile bringt es mit sich, wenn die elektronische Adaptereinheit hierfür derart ausgebildet ist, dass diese im bestimmungsgemäßen Gebrauch den gerätespezifischen Identifikationswert des an der Geräteschnittstelle angeschlossenen Elektrogeräts mit den abgespeicherten Gerätekennwerten abgleicht und bei Übereinstimmung den zumindest einen zum ermittelten Gerätekennwert dazugehörigen, gerätespezifischen Steuerparameter selektiert.

Ferner ist es vorteilhaft, wenn die elektronische Adaptereinheit derart ausgebildet ist, dass diese im bestimmungsgemäßen Gebrauch den zumindest einen ermittelten, insbesondere aus dem Datenspeicher selektierten, gerätespezifischen Steuerparameter an eine Geräteschutzsteuerung übermittelt, sodass das angeschlossene Elektrogerät während des Entladeprozesses des Akkupacks von der Geräteschutzsteuerung mittels des übermittelten gerätespezifischen Steuerparameters geschützt werden kann. Vorteile bringt es mit sich, wenn der Adapter die Geräteschutzsteuerung aufweist, die vorzugsweise in der zweiten Verbindungsleitung und/oder zwischen der elektronischen Adaptereinheit und der Akkupackschnittstelle angeordnet ist. Hierdurch kann das Akkupack kostengünstiger ausgebildet werden.

Ebenso bringt es Vorteile mit sich, wenn die Geräteschutzsteuerung derart ausgebildet ist, dass diese im bestimmungsgemäßen Gebrauch einen Schutzschalter, insbesondere einen MOSFET, unter Berücksichtigung des zumindest einen gerätespezifischen Steuerparameters schaltet und/oder steuert. Vorteile bringt es mit sich, wenn der Adapter diesen Schutzschalter aufweist, der vorzugsweise in der Stromleitung angeordnet ist. Vorteilhafterweise kann hierdurch das Akkupack kostengünstiger ausgebildet werden.

Ebenso ist es vorteilhaft, wenn die Geräteschutzsteuerung derart ausgebildet ist, dass diese im bestimmungsgemäßen Gebrauch den Schutzschalter - vorzugsweise zum Unterbrechen und/oder Reduzieren eines Stromflusses - schaltet, insbesondere öffnet, und/oder steuert. Dies ist insbesondere dann vorteilhaft, wenn ein erfasster Zustandsparameter den gerätespezifischen Steuerparameter übersteigt und/oder unterschreitet. Hierbei ist es vorteilhaft, wenn der Adapter und/oder das Akkupack zumindest ein erstes und/oder zweites Erfassungsmittel, insbesondere einen Sensor und/oder ein Messelement, zum Erfassen des zumindest einen Zustandsparameters des Akkupacks und/oder des Adapters umfassen.

In diesem Zusammenhang ist es vorteilhaft, wenn der Adapter das zumindest eine Erfassungsmittel umfasst. Des Weiteren ist es vorteilhaft, wenn das Erfassungsmittel vorzugsweise derart ausgebildet ist, dass mit diesem eine Stromstärke, eine Stromspannung, ein Ladezustand, eine Temperatur und/oder eine Erschütterung, insbesondere in dem Adapter und/oder in dem Akkupack, erfasst und/oder an die Geräteschutzsteuerung übermittelt werden kann.

Vorteilhaft ist es zudem, wenn der Adapter eine Akkupackschutzsteuerung aufweist, mit der der Akkupack derart gesteuert und/oder geregelt werden kann, dass eine Beschädigung des Akkupacks, insbesondere eine Tiefentladung und/oder eine Überhitzung, vermieden wird.

Vorteilhaft ist es, wenn die Akkupackschutzsteuerung derart ausgebildet ist, dass diese im bestimmungsgemäßen Gebrauch den Schutzschalter zum Unterbrechen und/oder Reduzieren eines Stromflusses schaltet, insbesondere öffnet, und/oder steuert, wenn ein von dem zumindest einen Erfassungsmittel erfasster Zustandsparameter einen Akkupackparameter übersteigt und/oder unterschreitet.

Vorteilhaft ist es zudem, wenn der Adapter eine Anzeige zum Anzeigen des Ladezustands des Akkupacks und/oder ein Betätigungselement zum Ein- und/oder Ausschalten der Anzeige aufweist.

Vorgeschlagen wird ein System mit einem Akkupack und einem Adapter. Hierbei ist der Adapter und/oder das Akkupack gemäß der vorangegangenen Beschreibung ausgebildet, wobei die genannten Merkmale einzeln oder in beliebiger Kombination vorhanden sein können.

Vorteilhaft ist es, wenn das Akkupack eine Akkupackschutzsteuerung, ein Erfassungsmittel und/oder einen Schutzschalter, insbesondere einen MOSFET, aufweist.

Ebenso ist es vorteilhaft, wenn die Akkupackschutzsteuerung derart ausgebildet ist, dass diese im bestimmungsgemäßen Gebrauch den Schutzschalter zum Unterbrechen und/oder Reduzieren eines Stromflusses schaltet, insbesondere öffnet und/oder steuert, wenn ein von zumindest einem Erfassungsmittel, insbesondere einem Sensor und/oder einem Messelement, erfasster Zustandsparameter einen Akkupackparameter übersteigt und/oder unterschreitet. Das Erfassungsmittel kann gemäß der vorangegangenen Beschreibung ausgebildet sein, wobei die genannten Merkmale einzeln oder beliebiger Kombination vorhanden sein können. Diesbezüglich ist es ferner vorteilhaft, wenn nur das Akkupack zumindest ein Erfassungsmittel umfasst (d.h. dass der Adapter kein Erfassungsmittel umfasst). Zusätzlich oder alternativ ist es vorteilhaft, wenn nur der Adapter zumindest ein Erfassungsmittel umfasst (d.h. dass das Akkupack kein Erfassungsmittel umfasst). Zusätzlich oder alternativ ist es vorteilhaft, wenn das Akkupack und der Adapter jeweils zumindest ein Erfassungsmittel umfassen.

Vorteile bringt es zudem mit sich, wenn das Akkupack das zumindest eine Erfassungsmittel aufweist und/oder dass dieses vorzugsweise derart ausgebildet ist, dass mit diesem eine Stromstärke, eine Stromspannung, ein Ladezustand, eine Temperatur und/oder eine Erschütterung, insbesondere in dem Akkupack, erfasst und/oder an die Akkupackschutzsteuerung übermittelt werden kann.

Verfahren, insbesondere computerimplementiertes Verfahren, zum Betreiben eines Adapters und/oder eines Systems gemäß der vorangegangenen Beschreibung, wobei die genannten Merkmale einzeln oder beliebiger Kombination sein können.

Verwendung eines Adapters gemäß der vorangegangenen Beschreibung in einem System gemäß der vorangegangenen Beschreibung, wobei die genannten Merkmale einzeln oder beliebiger Kombination vorhanden sein können.

Weitere Vorteile der Erfindung sind in den nachfolgenden Ausführungsbeispielen beschrieben. Es zeigt:
- **Figur 1**: einen Adapter zum lösbaren Verbinden eines Akkupacks mit einem Elektrogerät gemäß einem ersten Ausführungsbeispiel als schematisches Blockschaltbild,
- **Figur 2**: einen Adapter zum lösbaren Verbinden eines Akkupacks mit einem Elektrogerät gemäß einem zweiten Ausführungsbeispiel als schematisches Blockschaltbild,
- **Figur 3**: einen Adapter zum lösbaren Verbinden eines Akkupacks mit einem Elektrogerät gemäß einem dritten Ausführungsbeispiel als schematisches Blockschaltbild und
- **Figur 4**: einen Adapter zum lösbaren Verbinden eines Akkupacks mit einem Elektrogerät gemäß einem vierten Ausführungsbeispiel als schematisches Blockschaltbild.

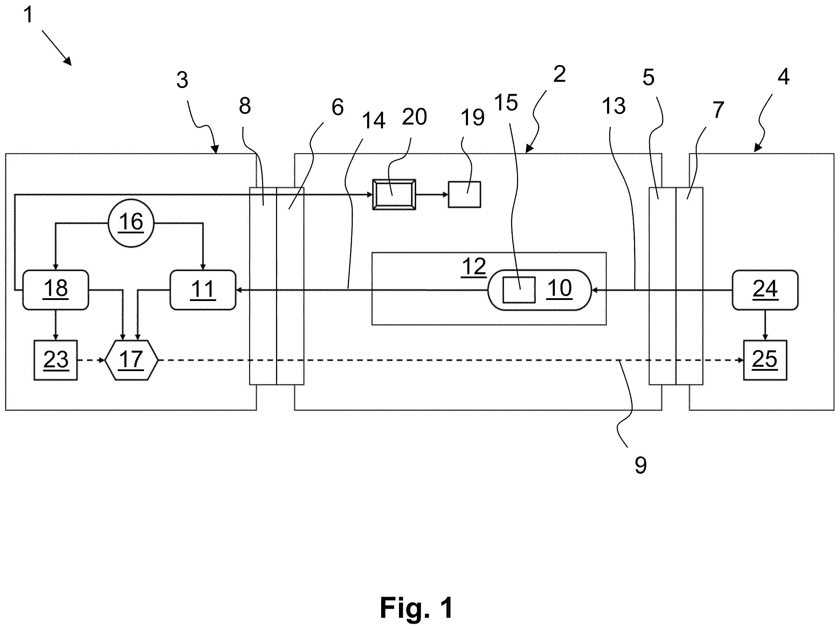

Figur 1 zeigt ein schematisches Blockschaltbild eines Adapters 2, mit dem ein Akkupack 3 mit einem Elektrogerät 4 lösbar und/oder elektrisch verbunden werden kann. In den Figuren 1 bis 4 sind unterschiedliche Ausführungsformen des Adapters 2 dargestellt. Hierbei ist der Adapter 2 jeweils zusammen mit dem Akkupack 3 als System 1 dargestellt, das das Zusammenwirken des Adapters 2 mit dem Akkupack 3 und/oder dem Elektrogerät 4 visualisiert. Die Erfindung ist jedoch nicht auf das System 1, d.h. auf die Einheit aus Adapter 2 und Akkupack 3, eingeschränkt. Stattdessen betrifft die Erfindung neben dem System 1 auch den Adapter 2 für sich allein.

Gemäß dem in Figur 1 dargestellten Ausführungsbeispiel umfasst der Adapter 2 eine Geräteschnittstelle 5, über die der Adapter 2 mit mehreren unterschiedlichen Elektrogeräten 4 verbunden werden kann. Exemplarisch ist in Figur 1 ein solches Elektrogerät 4 dargestellt. Dieses umfasst einen Elektromotor 25 und eine Elektrogerätesteuerung 24 zum Steuern des Elektromotors 25. Bei dem Elektrogerät 4 kann es sich beispielsweise um ein elektrisches Werkzeug, ein elektrisches Gartengerät und/oder ein elektrisches Reinigungsgerät handeln. Ferner umfasst der Adapter 2 eine erste Akkupackschnittstelle 6, mit der der Adapter 2 mit einem Akkupack 3 verbunden werden kann. Das Akkupack 3 weist zumindest einen Akkumulator 23 zum Bestromen des Elektromotors 25 des Elektrogeräts 4 auf. Das Akkupack 3 und der Adapter 2 sind zueinander korrespondierend ausgebildet, sodass sie sich in ihren Funktionen ergänzen und/oder das System 1 bilden. Die erste Akkupackschnittstelle 6 ist eine mechanische Schnittstelle, über die der Adapter 2 lösbar, insbesondere form- und/oder kraftschlüssig, mit dem Akkupack 3 verbunden werden kann. Des Weiteren ist die erste Akkupackschnittstelle 6 eine elektrische Schnittstelle, über die der Adapter 3 elektrisch mit dem Akkupack 3 verbunden werden kann. Zusätzlich ist die erste Akkupackschnittstelle 6 als Datenschnittstelle ausgebildet, über die vorzugsweise Signale, Daten oder andere Informationen übertragen und/oder ausgetauscht werden können. Das Akkupack 3 weist eine zur ersten Akkupackschnittstelle 6 des Adapters 2 korrespondierende zweite Akkupackschnittstelle 8 auf.

Auch die erste Geräteschnittstelle 5 ist als mechanische Schnittstelle ausgebildet, über die der Adapter 2 lösbar, insbesondere form- und/oder kraftschlüssig, mit dem Elektrogerät 4 verbunden werden kann. Des Weiteren ist die erste Geräteschnittstelle 5 eine elektrische Schnittstelle, über die der Adapter 2 elektrisch mit dem Elektrogerät 4 verbunden werden kann. Zusätzlich ist die erste Geräteschnittstelle 5 als Datenschnittstelle ausgebildet, über die vorzugsweise Signale, Daten oder andere Informationen übertragen und/oder ausgetauscht werden können. Das Elektrogerät 4 weist eine zur ersten Geräteschnittstelle 5 des Adapters 2 korrespondierende zweite Geräteschnittstelle 7 auf.

Wie aus Figur 1 hervorgeht, umfasst der Adapter 2 eine Stromleitung 9, die die erste Akkupackschnittstelle 6 und die erste Geräteschnittstelle 5 elektrisch miteinander verbindet. Zum Betreiben des Elektrogeräts 4 kann somit im bestimmungsgemäßen Gebrauch elektrischer Strom vom Akkupack 3 über die Stromleitung 9 zum Elektrogerät 4 fließen. In den Ausführungsbeispielen sind Leitungen (wie die Stromleitung 9), über die zum Betreiben des Elektrogeräts 4 Strom fließt, mit gestrichelten Pfeilen visualisiert. Datenleitungen, über die insbesondere Informationen, Steuerbefehle, Messwerte und/oder Daten, übertragen werden, sind mit durchgezogenen Pfeilen dargestellt.

Problematisch ist es, wenn mehrere unterschiedliche, d.h. unterschiedliche elektrische Spezifikationen aufweisende Elektrogeräte 4 über den gleichen Adapter 2 und mit dem gleichen Akkupack 3 betrieben werden sollen. So kommt es in diesen Fällen zwangsläufig vor, dass eine Geräteschutzsteuerung 11 des Adapters 2 und/oder des Akkupacks 3 nicht auf die spezifischen elektrischen Spezifikationen und/oder Parameter des verbundenen Elektrogeräts 4 abgestimmt ist. Unter dem Begriff "Geräteschutzsteuerung 11" ist eine Steuerung zu verstehen, die den Entladeprozess des Akkupacks 3 steuert und/oder überwacht, um eine Beschädigung des Elektrogeräts 4 zu vermeiden. Beim Betreiben des Elektrogeräts 4 mit einem elektrisch nicht angepassten Adapter 2 und/oder Akkupack 3 kann das Elektrogerät 4 und/oder das Akkupack 2, insbesondere durch eine Über- oder Falschbelastung, beschädigt werden, da die Geräteschutzsteuerung 11 von falschen Rahmenbedingungen ausgeht bzw. nicht individuell auf das angeschlossene Elektrogerät 4 eingestellt ist.

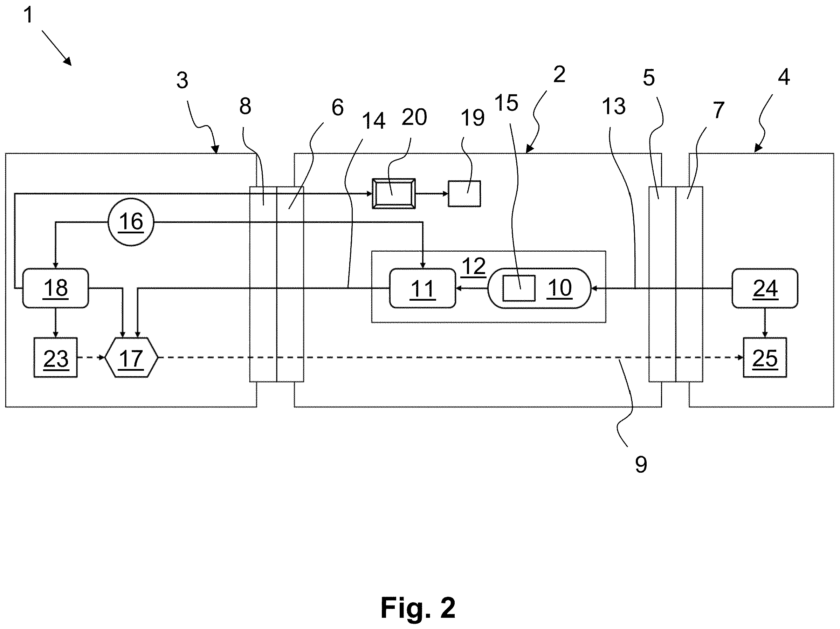

Um dies zu vermeiden, umfasst der Adapter 2 eine, insbesondere elektronische, Adaptereinheit 10. Diese ist in eine, vorzugsweise aktive, Elektronickomponente 12, insbesondere in eine integrierte Schaltung und/oder einen Chip, integriert und/oder als solche ausgebildet. Die Adaptereinheit 10 ist derart ausgebildet, dass diese für ein im bestimmungsgemäßen Gebrauch an der ersten Geräteschnittstelle 5 angeschlossenes Elektrogerät 4 zumindest einen gerätespezifischen Steuerparameter bestimmen kann. Hierbei kann es sich beispielsweise um einen Abschaltstrom des verbundenen Elektrogeräts 4 handeln. Der ermittelte gerätespezifische Steuerparameter, insbesondere der Abschaltstrom, kann dann von einer Geräteschutzsteuerung 11 verwendet werden, um das Akkupack 3 und/oder das Elektrogerät 4 während des Entladeprozesses des Akkupacks 3 vor einer Beschädigung, insbesondere vor einer Überbelastung oder Falschbelastung, zu schützen. Die Geräteschutzsteuerung 11 kann gemäß dem in Figur 1 dargestellten Ausführungsbeispiel Bestandteil des Akkupacks 3 sein. Gemäß den in Figur 2, 3 und 4 dargestellten Ausführungsbeispielen kann die Geräteschutzsteuerung 11 aber auch ebenso in den Adapter 2 integriert sein.

In dem in Figur 1 dargestellten Ausführungsbeispiel ist die elektronische Adaptereinheit 10 elektrisch mit der ersten Geräteschnittstelle 5 verbunden. Hierfür umfasst der Adapter 2 eine erste Verbindungsleitung 13. Des Weiteren ist die elektronische Adaptereinheit 10 mit der ersten Akkupackschnittstelle 6 verbunden. Hierfür umfasst der Adapter 2 eine zweite Verbindungsleitung 14, die von der elektronischen Adaptereinheit 10 zu der ersten Akkupackschnittstelle 6 führt.

Die elektronische Adaptereinheit 10 ist derart ausgebildet, dass diese selbstständig erkennen kann, wenn im bestimmungsgemäßen Gebrauch ein Elektrogerät 4 mit der ersten Geräteschnittstelle 5 gekoppelt ist. Hierfür kann die elektronische Adaptereinheit 10 beispielsweise die Stromleitung 9 und/oder die erste Verbindungsleitung 13 überwachen. Sobald über die Stromleitung 9 Strom fließt und/oder über die erste Verbindungsleitung 13 Daten übertragen werden, weiß die elektronische Adaptereinheit 10, dass ein Elektrogerät 4 mit der ersten Geräteschnittstelle 5 gekoppelt ist und/oder über diese betrieben wird.

Um den gerätespezifischen Steuerparameter für das an der Geräteschnittstelle angeschlossene Elektrogerät 4 selbstständig ermitteln zu können, ist die elektronische Adaptereinheit 10 derart ausgebildet, dass diese zunächst einen Identifikationswert des an der ersten Geräteschnittstelle 5 angeschlossenen Elektrogeräts 4 ermittelt. Diese Identifikationswertermittlung erfolgt insbesondere über die erste Verbindungsleitung 13 und/oder über die Stromleitung 9.

Der Identifikationswert kann beispielsweise ein gerätespezifischer Messwert des Elektrogeräts 4 sein, der von der elektronischen Adaptereinheit 10 über die erste Geräteschnittstelle 5 gemessen werden kann. Der gerätespezifische Messwert kann beispielsweise ein Widerstandswert eines vorliegend nicht dargestellten elektrischen Widerstands des an der ersten Geräteschnittstelle 5 angeschlossenen Elektrogeräts 4 sein. Dieser kann beispielsweise über die erste Verbindungsleitung 13 gemessen werden. Zusätzlich oder alternativ kann der gerätespezifische Messwert ein Strommesswert des an der ersten Geräteschnittstelle 5 angeschlossenen Elektrogeräts sein. Dieser Strommesswert kann von der elektronischen Adaptereinheit 10 beispielsweise von der Stromleitung 9 abgegriffen werden.

Zusätzlich oder alternativ kann der gerätespezifische Identifikationswert ein elektrisches Signal, insbesondere ein Abschaltsignal, des an der ersten Geräteschnittstelle 5 angeschlossenen Elektrogeräts 4 sein, das von der Elektrogerätsteuerung 24 anforderbar und/oder übermittelbar ist.

Ebenso ist es denkbar, dass der gerätespezifische Identifikationswert eine Bitfolge ist. Diese wird im bestimmungsgemäßen Gebrauch vorzugsweise von der elektronischen Adaptereinheit 10 angefordert und/oder von dem an der ersten Geräteschnittstelle 5 angeschlossenen Elektrogeräts 4 an die elektronische Adaptereinheit 10 übermittelt.

Anhand des Identifikationswertes kann die elektronische Adaptereinheit 10 nunmehr den gerätespezifischen Steuerparameter bestimmen. Hierfür umfasst die elektronische Adaptereinheit 10 einen Datenspeicher 15, in dem für mehrere unterschiedliche Elektrogeräte 4 jeweils zumindest ein gerätespezifischer Steuerparameter, insbesondere ein Abschaltstrom, abgespeichert ist. Der jeweilige gerätespezifische Steuerparameter ist hierbei, insbesondere in einer Liste, gemeinsam mit einem jeweiligen gerätespezifischen Gerätekennwert abgespeichert. Die elektronische Adaptereinheit 10 ist derart ausgebildet, dass diese den ermittelten gerätespezifischen Identifikationswert mit den im Datenspeicher 15 abgespeicherten Gerätekennwerten abgleicht. Bei Übereinstimmung des Identifikationswertes mit einem der Gerätekennwerte selektiert die elektronische Adaptereinheit 10 den gerätespezifischen Steuerparameter, der mit dem identifizierten Gerätekennwert abgespeichert ist.

Anschließend übermittelt die elektronische Adaptereinheit 10 den ermittelten gerätespezifischen Steuerparameter an die Geräteschutzsteuerung 11. Dies erfolgt gemäß dem in Figur 1 dargestellten Ausführungsbeispiel über die zweite Verbindungsleitung 14 und/oder die erste Akkupackschnittstelle 6. Mit dem gerätespezifischen Steuerparameter ist die Geräteschutzsteuerung 11 in der Lage, während eines Entladeprozesses des Akkupacks 3 das Elektrogerät und/oder das Akkupack 3 durch eine entsprechende Berücksichtigung des gerätespezifischen Steuerparameters zu schützen.

Hierfür umfasst das Akkupack 3 gemäß Figur 1 zusätzlich zur Geräteschutzsteuerung 11 zumindest ein erstes Erfassungsmittel 16, mit dem ein Zustandsparameter, insbesondere des Adapters 2, des Akkupacks 3 und/oder des Systems 1, ermittelt werden kann. Bei dem Zustandsparameter kann es sich beispielsweise um eine Stromstärke (insbesondere in der Stromleitung 9), eine Stromspannung (insbesondere zumindest einer Akkuzelle des Akkupacks 3), einen Ladezustand (insbesondere zumindest einer Akkuzelle des Akkupacks 3), eine Temperatur (insbesondere zumindest einer Akkuzelle des Akkupacks 3 und/oder des Akkupacks 3) und/oder eine Erschütterung handeln. Bei dem ersten Erfassungsmittel 16 kann es sich beispielsweise um einen Sensor und/oder ein Messelement handeln.

Des Weiteren weist das Akkupack 3 in dem in Figur 1 dargestellten Ausführungsbeispiel einen Schutzschalter 17 auf. Bei dem Schutzschalter 17 kann es sich beispielsweise um einen MOSFET handeln.

Die Geräteschutzsteuerung 11 ist derart ausgebildet, dass diese im bestimmungsgemäßen Gebrauch den Schutzschalter 17 unter Berücksichtigung des zumindest einen gerätespezifischen Steuerparameters - der von der elektronischen Adaptereinheit 10 ermittelt und an die Geräteschutzsteuerung 11 übertragen wurde - schaltet und/oder steuert. Demnach kann die Geräteschutzsteuerung 11 gemäß einem bevorzugten Ausführungsbeispiel derart ausgebildet sein, dass diese im bestimmungsgemäßen Gebrauch den Schutzschalter 17 zum Unterbrechen und/oder Reduzieren des Stromflusses in der Stromleitung 9 schaltet und/oder steuert, wenn der vom ersten Erfassungsmittel 16 erfasste Zustandsparameter, insbesondere eine Stromstärke in der Stromleitung 9, den gerätespezifischen Steuerparameter, insbesondere den Abschaltstrom des verbundenen Elektrogeräts 4, übersteigt. Hierdurch kann vermieden werden, dass das Elektrogerät 4 beschädigt wird.

Gemäß dem in Figur 1 dargestellten Ausführungsbeispiel umfasst der Adapter 2 ferner eine Akkupackschutzsteuerung 18. Diese dient im Wesentlichen dazu, das Akkupack 3 während des Entladeprozesses derart zu steuern, dass es vor einer Überbelastung, insbesondere Überhitzung, oder Tiefentladung geschützt ist. Hierfür ist die Akkupackschutzsteuerung 18 derart ausgebildet, dass diese im bestimmungsgemäßen Gebrauch den Schutzschalter 17 zum Unterbrechen und/oder Reduzieren des Stromflusses, insbesondere in der Stromleitung 9, schaltet und/oder steuert, wenn ein von dem ersten Erfassungsmittel 16 erfasster Zustandsparameter einen Akkupackparameter übersteigt und/oder unterschreitet.

Wie aus Figur 1 hervorgeht, umfasst der Adapter 2 ferner eine Anzeige 19, insbesondere ein Display und/oder zumindest eine LED, zum Anzeigen eines Ladezustands des Akkupacks 2. Hierfür ist die Anzeige 19 vorzugsweise mit der Akkupackschutzsteuerung 18 über die erste Akkupackschnittstelle 6 verbunden. Ferner umfasst der Adapter 2 ein Betätigungselement 20 zum Ein- und/oder Ausschalten der Anzeige 19.

Bei der nachfolgenden Beschreibung der in Figur 2, 3 und 4 dargestellten Ausführungsbeispiele werden für Merkmale, die im Vergleich zu dem in Figur 1 dargestellten ersten Ausführungsbeispiel in ihrer Ausgestaltung und/oder Wirkweise gleich sind, dieselben Bezugszeichen verwendet. Sofern nichts Abweichendes erläutert wird, entspricht deren Ausgestaltung und/oder Wirkweise der Ausgestaltung und/oder Wirkweise der vorstehend bereits beschriebenen Merkmale.

Im Unterschied zu dem in Figur 1 dargestellten ersten Ausführungsbeispiel umfasst der Adapter 2 bei dem in Figur 2 dargestellten zweiten Ausführungsbeispiel die Geräteschutzsteuerung 11. So befindet sich die Geräteschutzsteuerung 11 gemeinsam mit der elektronischen Adaptereinheit 10 auf der zumindest einen Elektronikkomponente 12 des Adapters 2. Infolgedessen erhält die Geräteschutzsteuerung 11 bei diesem Ausführungsbeispiel den zumindest einen Zustandsparameter - der vom ersten Erfassungsmittel 16 des Akkupacks 3 erfasst wird - über die erste Akkupackschnittstelle 6 vom Akkupack 3 übermittelt. Des Weiteren steuert die Geräteschutzsteuerung 11 des Adapters 2 den Schutzschalter 17 des Akkupacks 3 über die erste Akkupackschnittstelle 6 an. Vorteilhafterweise können hierdurch die Herstellungskosten des Akkupacks 2 reduziert werden.

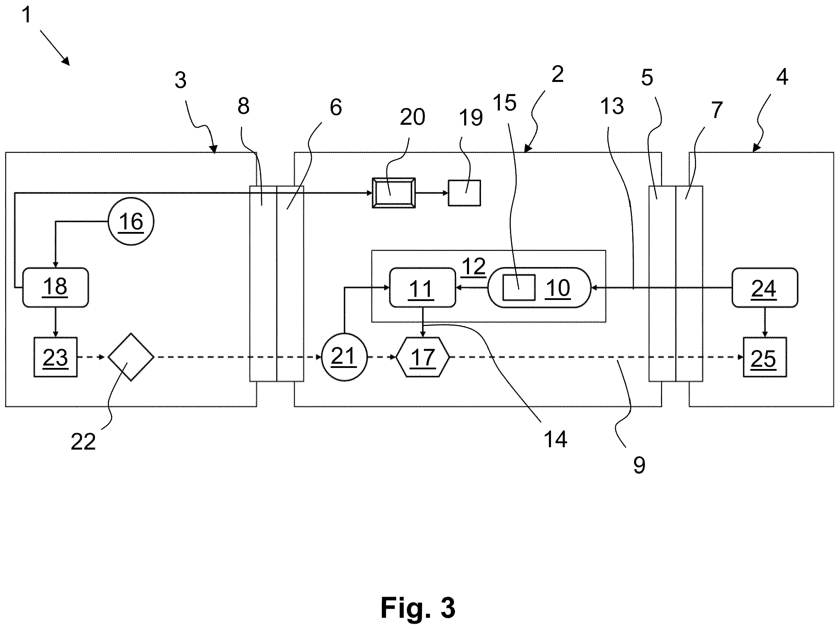

Im Unterschied zu dem in Figur 2 dargestellten zweiten Ausführungsbeispiel umfasst der Adapter 2 bei dem in Figur 3 dargestellten dritten Ausführungsbeispiel neben der Geräteschutzsteuerung 11 auch den Schutzschalter 17. Infolgedessen kann der Schutzschalter 17 innerhalb des Adapters 2 mit der Geräteschutzsteuerung 11 verschalten sein. Des Weiteren umfasst der Adapter 2 bei dem in Figur 3 dargestellten Ausführungsbeispiel ein zweites Erfassungsmittel 21. Dieses kann gemäß der vorstehenden Beschreibung des ersten Erfassungsmittel 16 ausgebildet sein, wobei die genannten Merkmale einzeln oder beliebiger Kombination vorhanden sein können. Bei dem zweiten Erfassungsmittel 21 handelt es sich vorzugsweise um ein Messelement, insbesondere zum Messen einer Stromstärke in der Stromleitung 9.

Demnach kann beispielsweise über das zweite Erfassungsmittel 21 die Stromstärke in der Stromleitung 9 ermittelt und mit einem gerätespezifischen Abschaltstrom des Elektrogeräts 4 abgeglichen werden. Dieser gerätespezifische Abschaltstrom wurde gemäß der vorangegangenen Beschreibung von der elektronischen Adaptereinheit 10 ermittelt und an die Geräteschutzsteuerung 11 des Adapters 2 übertragen. Sobald die Geräteschutzsteuerung 11 ein Überschreiten des Abschaltstrom feststellt, schaltet und/oder regelt diese zum Schutz des Elektrogeräts 4 den Schutzschalter 17. Hierdurch kann beispielsweise der Stromfluss in der Stromleitung 9 unterbrochen werden. Durch die zusätzliche Integration des Schutzschalter 17 können die Herstellungskosten des Akkupacks 3 reduziert werden. Damit sich das Akkupack 3 auch ohne Schutzschalter 17 selbst schützen kann, ist in das Akkupack 3 eine Schmelzsicherung 22 integriert.

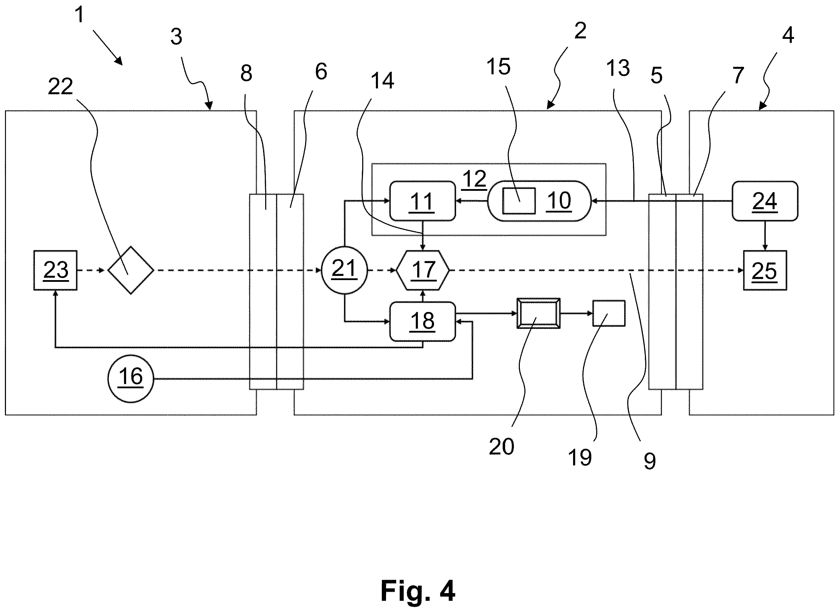

Im Unterschied zu dem in Figur 3 dargestellten dritten Ausführungsbeispiel umfasst der Adapter 2 bei dem in Figur 4 dargestellten Ausführungsbeispiel zusätzlich die Akkupackschutzsteuerung 18. Demzufolge kann die Akkupackschutzsteuerung 18 von dem ersten Erfassungsmittel 16 Zustandsparameter des Akkupacks 3 über die erste Akkupackschnittstelle 6 erhalten. Des Weiteren kann die Akkupackschutzsteuerung 18 des Akkupacks 3 den zumindest einen Akkumulator 23 des Akkupacks über die erste Akkupackschnittstelle ansteuern. Die Akkupackschutzsteuerung 18 kann auch mit dem zweiten Erfassungsmittel 21 des Adapters 2 verbunden sein.

Die in Figur 1, 2, 3 und 4 gezeigten Ausführungsbeispiele können ferner derart variiert werden, dass nur das Akkupack 3 zumindest ein Erfassungsmittel 16, 21 umfasst (d.h. dass der Adapter 2 kein Erfassungsmittel 16, 21 umfasst). Zusätzlich oder alternativ ist es vorteilhaft, wenn nur der Adapter 2 zumindest ein Erfassungsmittel 16, 21 umfasst (d.h. dass das Akkupack 3 kein Erfassungsmittel 16, 21 umfasst). Zusätzlich oder alternativ ist es vorteilhaft, wenn das Akkupack 3 und der Adapter 2 jeweils zumindest ein Erfassungsmittel 16, 21 umfassen.

### Bezugszeichenliste

- 1: System
- 2: Adapter
- 3: Akkupack
- 4: Elektrogerät
- 5: erste Geräteschnittstelle
- 6: erste Akkupackschnittstelle
- 7: zweite Geräteschnittstelle
- 8: zweite Akkupackschnittstelle
- 9: Stromleitung
- 10: elektronische Adaptereinheit
- 11: Geräteschutzsteuerung
- 12: Elektronikkomponente
- 13: erste Verbindungsleitung
- 14: zweite Verbindungsleitung
- 15: Datenspeicher
- 16: erstes Erfassungsmittel
- 17: Schutzschalter
- 18: Akkupackschutzsteuerung
- 19: Anzeige
- 20: Betätigungselement
- 21: zweites Erfassungsmittel
- 22: Schmelzsicherung
- 23: Akkumulator
- 24: Elektrogerätsteuerung
- 25: Elektromotor

## Patentansprüche

1. Adapter (2) zum lösbaren Verbinden eines Akkupacks (3) mit einem Elektrogerät (4)
mit einer Geräteschnittstelle (5) zum Verbinden des Elektrogeräts (4), mit einer Akkupackschnittstelle (6) zum Verbinden des Akkupacks (3), und
mit einer Stromleitung (9), die die Akkupackschnittstelle (6) und die Geräteschnittstelle (5) elektrisch miteinander verbindet, sodass zum Betreiben des Elektrogeräts (4) elektrischer Strom vom Akkupack (3) zum Elektrogerät (4) fließen kann,
**dadurch gekennzeichnet,**
**dass** der Adapter (2) eine elektronische Adaptereinheit (10) umfasst, die derart ausgebildet ist, dass diese für ein im bestimmungsgemäßen Gebrauch an der Geräteschnittstelle (5) angeschlossenes Elektrogerät (4) zumindest einen gerätespezifischen Steuerparameter, insbesondere einen Abschaltstrom, bestimmen kann.

2. Adapter nach dem vorherigen Anspruch, **dadurch gekennzeichnet, dass** die elektronische Adaptereinheit (10) derart ausgebildet ist, dass diese selbstständig erkennen kann, wenn im bestimmungsgemäßen Gebrauch ein Elektrogerät (4) mit der Geräteschnittstelle (5) gekoppelt ist.

3. Adapter nach einem der vorherigen Ansprüche, **dadurch gekennzeichnet, dass** die elektronische Adaptereinheit (10) derart ausgebildet ist, dass diese im bestimmungsgemäßen Gebrauch den gerätespezifischen Steuerparameter für das an der Geräteschnittstelle (5) angeschlossene Elektrogerät (4) anhand eines gerätespezifischen Identifikationswertes ermittelt.

4. Adapter nach einem der vorherigen Ansprüche, **dadurch gekennzeichnet, dass** der gerätespezifische Identifikationswert ein gerätespezifischer Messwert, insbesondere ein Widerstandswert eines elektrischen Widerstands des an der Geräteschnittstelle (5) angeschlossenen Elektrogeräts (4) und/oder ein Strommesswert des an der Geräteschnittstelle (5) angeschlossenen Elektrogeräts (4), ist; oder
dass der gerätespezifische Identifikationswert eine Bitfolge und/oder ein elektrisches Signal, insbesondere ein Abschaltsignal, des an der Geräteschnittstelle (5) angeschlossenen Elektrogeräts (4) ist.

5. Adapter nach einem der vorherigen Ansprüche, **dadurch gekennzeichnet, dass** in der elektronischen Adaptereinheit (10), insbesondere in einer Liste, für mehrere unterschiedliche Elektrogeräte (4) jeweils zumindest ein gerätespezifischer Steuerparameter, insbesondere zusammen mit einem Gerätekennwert, abgespeichert ist.

6. Adapter nach einem der vorherigen Ansprüche, **dadurch gekennzeichnet, dass** die elektronische Adaptereinheit (10) derart ausgebildet ist, dass diese im bestimmungsgemäßen Gebrauch den gerätespezifischen Identifikationswert des an der Geräteschnittstelle (5) angeschlossenen Elektrogeräts (4) mit den abgespeicherten Gerätekennwerten abgleicht und bei Übereinstimmung den zumindest einen zum ermittelten Gerätekennwert dazugehörigen gerätespezifischen Steuerparameter selektiert.

7. Adapter nach einem der vorherigen Ansprüche, **dadurch gekennzeichnet, dass** die elektronische Adaptereinheit (10) derart ausgebildet ist, dass diese im bestimmungsgemäßen Gebrauch den zumindest einen ermittelten, gerätespezifischen Steuerparameter an eine Geräteschutzsteuerung (11) übermittelt, wobei der Adapter (2) vorzugsweise die Geräteschutzsteuerung (11) aufweist.

8. Adapter nach einem der vorherigen Ansprüche, **dadurch gekennzeichnet, dass** die Geräteschutzsteuerung (11) derart ausgebildet ist, dass diese im bestimmungsgemäßen Gebrauch einen Schutzschalter (17), insbesondere einen MOSFET, unter Berücksichtigung des zumindest einen gerätespezifischen Steuerparameters schaltet und/oder steuert, wobei der Adapter (2) vorzugsweise den Schutzschalter (17) aufweist.

9. Adapter nach einem der vorherigen Ansprüche, **dadurch gekennzeichnet, dass** die Geräteschutzsteuerung (11) derart ausgebildet ist, dass diese im bestimmungsgemäßen Gebrauch den Schutzschalter (17) zum Unterbrechen und/oder Reduzieren eines Stromflusses schaltet, und/oder steuert, wenn ein von zumindest einem Erfassungsmittel (16, 21) erfasster Zustandsparameter den gerätespezifischen Steuerparameter übersteigt.

10. Adapter nach einem der vorherigen Ansprüche, **dadurch gekennzeichnet, dass** der Adapter das zumindest eine Erfassungsmittel (16, 21) aufweist und/oder
dass das Erfassungsmittel (16, 21) derart ausgebildet ist, dass mit diesem eine Stromstärke, eine Stromspannung, ein Ladezustand, eine Temperatur und/oder eine Erschütterung, insbesondere in dem Adapter (2) und/oder in dem Akkupack (3), erfasst und/oder an die Geräteschutzsteuerung (11) übermittelt werden kann.

11. Adapter nach einem der vorherigen Ansprüche, **dadurch gekennzeichnet, dass** der Adapter eine Akkupackschutzsteuerung (18) aufweist und/oder
dass die Akkupackschutzsteuerung (18) derart ausgebildet ist, dass diese im bestimmungsgemäßen Gebrauch den Schutzschalter (17) zum Unterbrechen und/oder Reduzieren eines Stromflusses schaltet und/oder steuert, wenn ein von dem zumindest einen Erfassungsmittel (16, 21) erfasster Zustandsparameter einen Akkupackparameter übersteigt und/oder unterschreitet.

12. Adapter nach einem der vorherigen Ansprüche, **dadurch gekennzeichnet, dass** der Adapter (2) eine Anzeige (19) zum Anzeigen des Ladezustands des Akkupacks (3) und/oder ein Betätigungselement (20) zum Ein- und/oder Ausschalten der Anzeige (19) aufweist.

13. System (1) mit einem Akkupack (3) und einem Adapter, **dadurch gekennzeichnet, dass** der Adapter (2) gemäß einem der vorherigen Ansprüche ausgebildet ist.

14. Verfahren zum Betreiben eines Adapters (2) und/oder eines Systems (1) gemäß einem oder mehreren der vorherigen Ansprüche.

15. Verwendung eines Adapters (2) gemäß dem vorherigen Anspruch 1 in einem System (1) gemäß dem vorherigen Anspruch 14.
